(19) **Europäisches Patentamt**
**European Patent Office**
**Office européen des brevets**

(11) **EP 2 310 245 B1**

(12) **FASCICULE DE BREVET EUROPEEN**

(45) Date de publication et mention
de la délivrance du brevet:
**13.06.2012 Bulletin 2012/24**

(51) Int Cl.:
***B62D 3/12*** *(2006.01)*    ***F16H 55/28*** *(2006.01)*

(21) Numéro de dépôt: **09784494.8**

(86) Numéro de dépôt international:
**PCT/FR2009/051364**

(22) Date de dépôt: **09.07.2009**

(87) Numéro de publication internationale:
**WO 2010/010272 (28.01.2010 Gazette 2010/04)**

(54) **DISPOSITIF DE POUSSOIR À EXCENTRIQUE POUR DIRECTION À CRÉMAILLÈRE DE VÉHICULE AUTOMOBILE**

EXZENTRISCHES DRUCKELEMENT FÜR DIE ZAHNSTANGENLENKUNG EINES KRAFTFAHRZEUGS

ECCENTRIC PUSH MEMBER DEVICE FOR MOTOR VEHICLE RACK-AND-PINION STEERING ASSEMBLY

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **23.07.2008 FR 0804191**

(43) Date de publication de la demande:
**20.04.2011 Bulletin 2011/16**

(73) Titulaire: **JTEKT Europe**
**69540 Irigny (FR)**

(72) Inventeurs:
• **PLATARET, Nicolas**
**F-69630 Chaponost (FR)**
• **BROCHOT, Patrice**
**F-69600 Oullins (FR)**
• **COUCHOUX, Dominique**
**F-69510 Thurins (FR)**

(74) Mandataire: **Chevalier, Renaud Philippe et al**
**Cabinet Germain & Maureau**
**BP 6153**
**69466 Lyon Cedex 06 (FR)**

(56) Documents cités:
**FR-A- 2 219 868    US-B1- 6 247 375**

## Description

La présente invention concerne, de façon générale, les systèmes de direction des véhicules automobiles. Plus particulièrement, cette invention a pour objet un dispositif de poussoir pour direction à crémaillère de véhicule automobile. Encore plus particulièrement, il s'agit d'un dispositif de poussoir dit « à excentrique ».

Il est rappelé que, dans la plupart des systèmes de direction actuels des véhicules automobiles, un pignon de direction est lié en rotation avec une colonne de direction, manoeuvrée à l'aide du volant de conduite du véhicule, le pignon étant en prise avec une crémaillère qui est montée coulissante en direction longitudinale dans un carter de direction. Les deux extrémités de la crémaillère, extérieures au carter, sont accouplées respectivement à deux biellettes de direction, qui sont elles-mêmes associées respectivement aux roues directrices gauche et droite du véhicule. Ainsi, la rotation du volant dans un sens ou dans l'autre, transmise par la colonne de direction au pignon, est convertie en une translation correspondante de la crémaillère qui, par l'intermédiaire des biellettes, provoque l'orientation des roues directrices pour un braquage à droite ou à gauche.

Dans un tel système de direction, le mécanisme pignon-crémaillère, lié au train de roulement avant du véhicule par l'intermédiaire des biellettes, est soumis à des remontées d'efforts, à des chocs et à des vibrations, suivant l'état de la chaussée parcourue par le véhicule. En raison de l'angle formé par les biellettes avec la crémaillère, il peut alors se produire un effort sur la crémaillère, qui risque de l'écarter du pignon. Pour cette raison, la crémaillère est habituellement appliquée de façon permanente contre le pignon par un dispositif dit de "poussoir", agissant élastiquement sur le dos de la crémaillère dans la région du pignon pour presser fortement la denture de cette crémaillère contre le pignon. Ainsi le poussoir limite le jeu entre les dentures respectives du pignon et de la crémaillère, et ce poussoir permet aussi de contrôler l'effort de coulissement de la crémaillère dans le carter. De plus l'action du poussoir permet de compenser des défauts de rectitude de la crémaillère.

Dans sa forme de réalisation la plus courante, le dispositif de poussoir comprend le poussoir proprement dit, qui est une pièce rigide montée mobile en translation dans une direction sensiblement perpendiculaire à l'axe longitudinal de la crémaillère, et sollicitée vers le dos de la crémaillère par des moyens à ressort également disposés suivant une direction sensiblement perpendiculaire à l'axe longitudinal de la crémaillère.

Au contraire, dans le cas d'un dispositif de poussoir à excentrique, tel que décrit par exemple dans le brevet US 6247375 B1 (ou les documents de brevets FR 2219868 A et EP 0770538 A2), un support rotatif comprend une partie excentrée qui pousse la crémaillère vers le pignon, le support rotatif étant monté tournant dans un carter, tel que le carter d'un pignon, autour d'un axe parallèle à l'axe longitudinal de la crémaillère. La périphérie interne dudit support est excentrée par rapport à sa périphérie extrême, de telle manière que, lorsqu'il tourne dans le carter, sa partie excentrée soit appliquée contre le dos de la crémaillère et repousse celle-ci vers les dents du pignon, afin de les maintenir en prise. Le support est sollicité en rotation dans un sens par un ressort (voir en particulier le document FR 2 219 868 A précite) qui correspond au préambule de la revendication 1, de manière à rattraper le jeu provoqué par les imprécisions de montage et par l'usure entre les dents de la crémaillère et les dents du pignon.

Dans le cas du brevet US 6247375 B1 précité, la partie interne du support rotatif comporte un évidement dans lequel est monté un ressort à lame, qui vient s'appuyer sur la crémaillère et permet ainsi un léger mouvement radial pour compenser les défauts de rectitude de la crémaillère.

Les avantages d'un dispositif de poussoir à excentrique résident, en particulier, dans la compacité d'un tel dispositif, et dans le fait qu'il peut être rendu irréversible, tout retour en arrière du support rotatif (à partir d'une certaine position angulaire atteinte) étant rendu impossible.

Toutefois, dans l'agencement selon le brevet US 6247375 B1, le fait de placer le ressort à lame entre le support rotatif et la crémaillère a pour conséquence que, lorsque la crémaillère est sollicitée par des efforts variables, celle-ci n'appuie pas toujours de la même façon sur le ressort, ce qui peut provoquer des pertes de contact entre ledit ressort et la crémaillère. De plus, le ressort à lame change de position dans le temps, compte tenu de la rotation progressive du support, ce qui provoque une variation de l'orientation et de l'intensité des efforts appliqués sur la crémaillère. Tout ceci peut dégrader fortement la fonction réalisée par le dispositif de poussoir à excentrique.

La présente invention vise à remédier à ces inconvénients, donc à améliorer le fonctionnement d'un dispositif de poussoir à excentrique pour direction à crémaillère, par une meilleure maîtrise des mouvements et positions des organes du dispositif de poussoir.

A cet effet, l'invention a pour objet un dispositif de poussoir à excentrique pour direction à crémaillère de véhicule automobile, dispositif qui comprend de façon connue en soi un support rotatif dont la périphérie interne est excentrée par rapport à la périphérie externe, ledit support étant sollicité en rotation dans un sens par des moyens à ressort, et étant prévu pour être appliqué par sa périphérie interne excentrée contre le dos de la crémaillère pour repousser celle-ci vers les dents du pignon de direction, ce dispositif de poussoir à excentrique étant essentiellement caractérisé par le fait que le support rotatif est monté tournant dans un boîtier, lui-même monté coulissant sensiblement perpendiculairement au plan de la denture de la crémaillère, d'autres moyens à ressort amortissants étant disposés entre le boîtier coulissant et un élément fixe, tel que le carter de direction, pour agir sur ledit boîtier suivant sa direction de coulissement.

Ainsi, le principe de l'invention consiste à séparer la fonction de rattrapage des jeux dus à l'assemblage et à l'usure, ce qui est réalisé par le support excentrique lui-même, d'une part, et la fonction d'absorption des défauts de rectitude de la crémaillère et éventuellement des défauts géométriques du pignon, ce qui est réalisé par le mouvement de translation du boîtier, soumis à l'action de moyens à ressort amortissants eux-mêmes en appui sur le carter, d'autre part. Cette association des deux fonctions permet, en particulier, d'avoir un bon guidage de la crémaillère qui repose directement sur un support rigide à partie excentrée. Elle permet également de limiter les causes de dégradation de l'irréversibilité du dispositif de poussoir, en stabilisant les appuis du support rotatif. L'absorption des défauts de rectitude de la crémaillère est mieux maîtrisée du fait du guidage du boîtier coulissant dans une glissière aménagée dans le carter de direction.

Les moyens à ressort, qui sollicitent en rotation le support à partie excentrée, sont ici disposés entre ce support rotatif et le boîtier coulissant ; ces moyens peuvent être constitués par au moins un ressort de compression ou de traction, ou par au moins un ressort de torsion, ou par au moins un ressort à lame ou encore par au moins un ressort à spirale.

Les moyens à ressort amortissants, placés entre le boîtier coulissant et le carter de direction, peuvent être constitués par au moins une lame ressort ou par au moins un bloc en élastomère, ou par au moins un joint torique, ou par au moins un ressort de compression.

Dans une forme de réalisation particulière, ces moyens à ressort amortissants comprennent deux joints toriques, respectivement placés aux deux extrémités du boîtier coulissant, autour de ce boîtier.

L'invention sera mieux comprise à l'aide de la description qui suit, en référence au dessin schématique annexé représentant, à titre d'exemple, une forme d'exécution de ce dispositif de poussoir à excentrique pour direction à crémaillère de véhicule automobile.

La figure 1 est un schéma de principe d'un dispositif de poussoir à excentrique conforme à la présente invention ;
Figure 2 est un schéma illustrant la condition d'irréversibilité du dispositif de poussoir ;
Figure 3 est un autre schéma explicatif, illustrant un aspect du fonctionnement de ce dispositif de poussoir ;
Figure 4 est une vue en coupe, passant par l'axe de la crémaillère, d'un exemple pratique de réalisation du dispositif de poussoir à excentrique selon l'invention ;
Figure 5 est une vue en coupe transversale de ce dispositif de poussoir, suivant V-V de figure 4, montrant plus particulièrement la réalisation de la glissière de guidage en translation du boîtier coulissant.

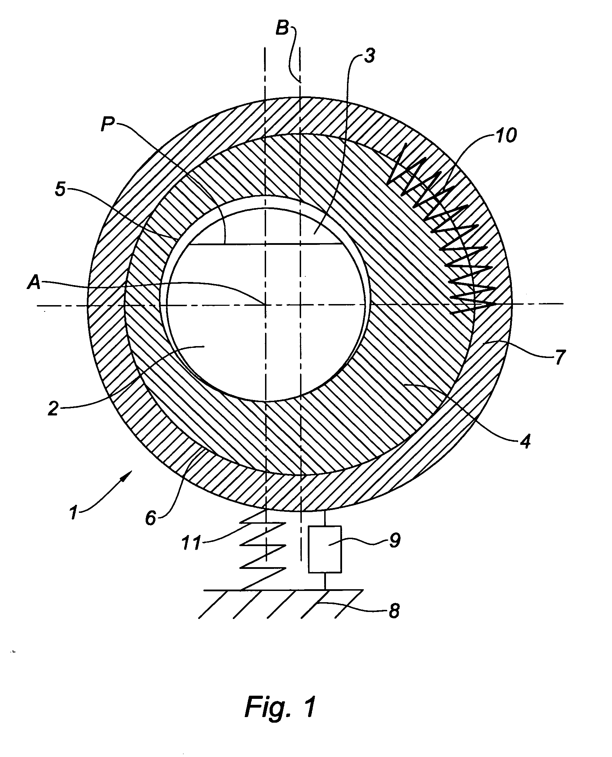

En se référant d'abord à la figure 1, le dispositif de poussoir désigné dans son ensemble par le repère 1 est associé à une crémaillère 2 d'une direction de véhicule automobile. La crémaillère 2, dont l'axe longitudinal est indiqué par A, possède une denture 3 dont le plan est indiqué en P. Le dispositif de poussoir 1 est placé à faible distance du pignon de direction (ici non représenté) qui vient en prise avec la denture 3 de la crémaillère 2.

Le dispositif de poussoir 1 comprend, comme composant principal, un support excentrique 4 qui est une pièce rigide de conformation générale annulaire, mais comportant une périphérie interne circulaire 5 qui se trouve excentrée par rapport à sa périphérie externe circulaire 6. Le support excentrique 4 est traversé par la crémaillère 2, sa périphérie interne circulaire 5 se trouvant appliquée contre le dos de la crémaillère 2, c'est-à-dire contre la région extérieure de cette crémaillère 2 opposée à la denture 3 de celle-ci.

Le support excentrique 4 est monté rotatif dans un boîtier 7 de forme correspondante, autrement dit un boîtier d'allure générale cylindrique, qui est lui-même guidé en translation dans la direction d'un axe B, orthogonal au plan P de la denture 3 de la crémaillère 2. Le guidage en translation du boîtier 7 est assuré par une liaison de type « glissière » avec le carter de direction, carter qui est symbolisé en 8 comme une partie fixe, la liaison de type glissière étant elle-même schématisée en 9.

Un premier élément élastique 10, monté entre le support excentrique 4 et le boîtier coulissant 7, sollicite ce support excentrique 4 en rotation, dans un sens donné. Un second élément élastique 11, à propriétés amortissantes, est monté entre le boîtier coulissant 7 et le carter de direction 8 et agit parallèlement à la liaison de type glissière 9.

Le support excentrique 4 rotatif, auquel est associé l'élément élastique 10, est dimensionné de telle façon qu'il soit irréversible et entraîné en rotation par glissement au moyen de l'élément élastique 10, pour presser le dos de la crémaillère 2 en compensant les jeux d'assemblage et d'usure. La position angulaire moyenne du support excentrique 4 est choisie de manière appropriée, afin de compenser un maximum d'usure suivant l'axe B défini précédemment, tout en minimisant le mouvement de la crémaillère 2 suivant l'axe C perpendiculaire à cet axe B et situé dans un plan normal à l'axe longitudinal A de la crémaillère 2, autrement dit le plan de la figure 1. Le second élément élastique 11, qui est un élément amortissant, permet un déplacement relatif maîtrisé des dents du pignon de direction et de la denture 3 de la crémaillère 2, pour absorber les défauts de rectitude de cette crémaillère 2, étant entendu que l'effort nominal, la raideur et l'amortissement de ce second élément élastique 11 sont choisis pour obtenir un tel déplacement relatif maîtrisé.

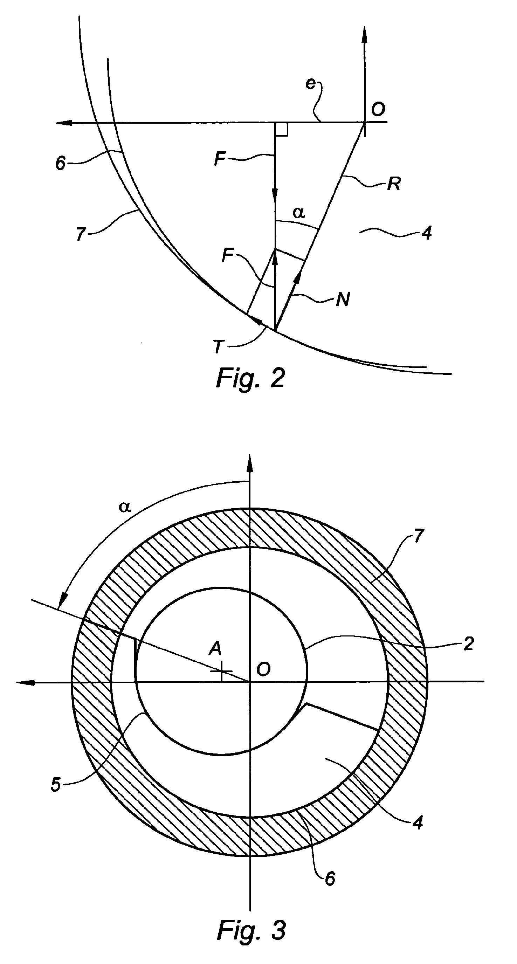

En ce qui concerne le support excentrique 4 rotatif, l'expression « dimensionné de telle façon qu'il soit irréversible » signifie que les différentes dimensions respectent la condition suivante (voir figures 2 et 3) :

Le rapport entre la valeur de l'excentration e et la distance radiale entre le centre O de la périphérie externe 6 du support excentrique 4 et le point de contact entre le support excentrique 4 et le boîtier coulissant 7 est inférieur à la valeur du coefficient de frottement statique entre le support excentrique 4 et le boîtier coulissant 7, pour des valeurs d'excentration faibles.

Dans la formulation précédente, par « valeur de l'excentration » on entend la distance minimale entre l'axe longitudinal de la périphérie interne 5 et l'axe longitudinal de la périphérie externe 6 du support excentrique 4.

Cette condition d'irréversibilité peut s'écrire, d'une manière générale :

$$e/(R.\cos(\alpha)) < f$$

soit, pour un angle a dont la valeur est proche de zéro :

$$e/R < f$$

formule dans laquelle :

- e est la valeur de l'excentration,
- R est le rayon de contact, autrement dit la distance entre le centre O de la périphérie extérieure 6 du support excentrique 4 et le point de contact,
- f est le coefficient de frottement statique entre les deux surfaces en contact.

La formulation selon laquelle « la position angulaire moyenne du support excentrique est choisie de manière appropriée, afin de compenser un maximum d'usure suivant l'axe B défini précédemment, tout en minimisant le mouvement de la crémaillère 2 suivant l'axe C perpendiculaire à cet axe B et situé dans un plan normal à l'axe longitudinal A de la crémaillère 2 » est explicitée par le schéma de la figure 3. Elle signifie que l'angle a, formé par la ligne droite passant par le centre de la périphérie interne 5 excentrée et par le centre O de la périphérie externe 6 du support excentrique 4, d'une part, et par la ligne droite normale au plan P de la denture 3 de la crémaillère 2, d'autre part, est un angle dont la valeur doit varier dans un intervalle réduit et centré sur une valeur moyenne égale à 90°.

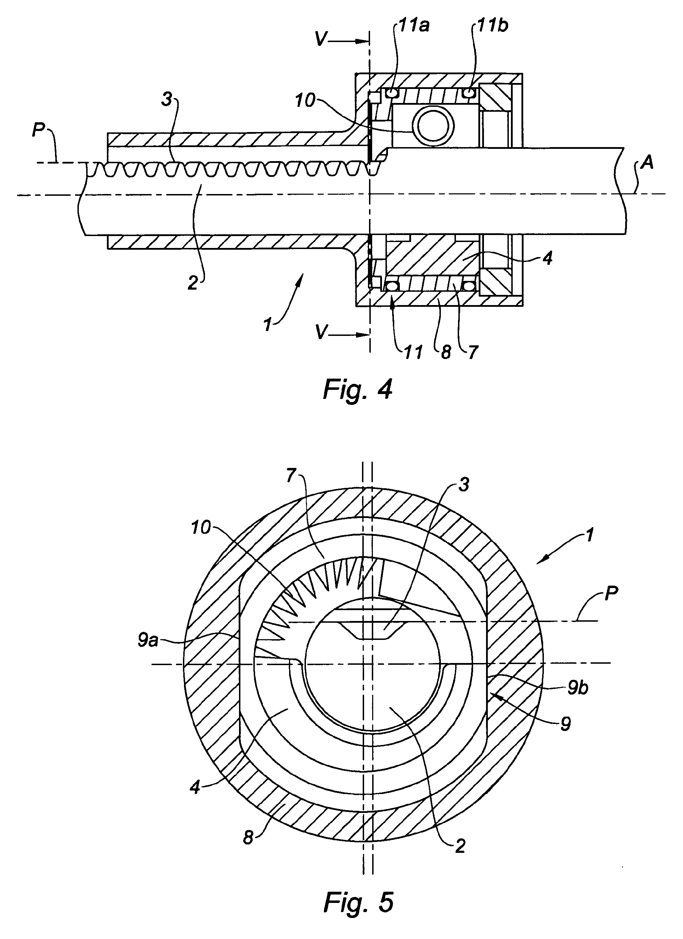

En se référant maintenant aux figures 4 et 5, on décrira ci-dessous une réalisation concrète du dispositif de poussoir 1, correspondant aux principes précédemment exposés.

Le support excentrique 4 présente ici une forme de coin, et il est sollicité en rotation par un ressort de compression 10 qui suit un trajet courbé en arc de cercle, à l'intérieur du boîtier 7 qui lui-même possède une allure générale cylindrique. L'ensemble est monté à l'intérieur d'une partie de carter de direction 8, entourant la crémaillère 2 et située à proximité du pignon de direction (non représenté). Comme le montre la figure 5, la liaison glissière 9 entre le boîtier 7 et le carter 8 est réalisée par des méplats 9a et 9b parallèles entre eux et perpendiculaires au plan P de la denture 3 de la crémaillère 2.

En se référant de nouveau à la figure 4, l'élément élastique 11 à propriétés amortissantes comprend ici deux joints toriques 11 a et 11 b, qui sont montés dans des gorges annulaires ménagées respectivement vers les deux extrémités du boîtier 7. Ainsi disposés, les deux joints toriques 11a et 11b autorisent le coulissement du boîtier 7 dans la direction de la liaison de type glissière 9, tout en amortissant ce coulissement.

On ne s'éloignerait pas du cadre de l'invention, telle que définie dans les revendications annexées :

- en modifiant des détails de forme des composants du dispositif, tels que le support excentrique et le boîtier coulissant,
- en ayant recours à tous équivalents des moyens décrits, notamment en remplaçant le ressort de compression, agissant sur le support excentrique, par un ressort d'un autre type, tel qu'un ressort de traction ou un ressort de torsion, ou un ressort à lame ou un ressort à spirale,
- de même, en remplaçant le double joint torique par tout autre élément élastique à propriétés amortissantes, tel qu'une lame ressort en matériau adapté, ou un bloc en élastomère, ou un ressort de compression,
- en destinant ce dispositif de poussoir à des systèmes de direction de tous types, pouvant être des directions manuelles ou des directions assistées électriques ou hydrauliques.

**Revendications**

1. Dispositif de poussoir à excentrique pour direction à crémaillère de véhicule automobile, le dispositif de poussoir (1) comprenant un support rotatif (4) dont la périphérie interne (5) est excentrée par rapport à la périphérie externe (6), ledit support (4) étant sollicité en rotation dans un sens par des moyens à ressort (10), et étant prévu pour être appliqué par sa périphérie interne (5) excentrée contre le dos de la crémaillère (2) pour repousser celle-ci vers les dents du pignon de direction, **caractérisé en ce que** le support rotatif (4) est monté tournant dans un boîtier (7), lui-même monté coulissant sensiblement perpendiculairement au plan (P) de la denture (3) de la crémaillère (2), d'autres moyens à ressort amortissants (11 ; 11 a ; 11 b) étant disposés entre le boîtier coulissant (7) et un élément fixe, tel que le carter de direction (8), pour agir sur ledit boîtier (7) suivant sa direction de coulissement (B).

2. Dispositif de poussoir à excentrique selon la revendication 2, **caractérisé en ce que** le boîtier (7) est guidé en coulissement dans une glissière (9) aménagée dans le carter de direction (8).

3. Dispositif de poussoir à excentrique selon la revendication 1 ou 2, **caractérisé en ce que** les moyens à ressort (10), qui sollicitent en rotation le support (4) à partie excentrée, sont disposés entre ce support rotatif (4) et le boîtier coulissant (7), et sont constitués par au moins un ressort de compression ou de traction.

4. Dispositif de poussoir à excentrique selon la revendication 1 ou 2, **caractérisé en ce que** les moyens à ressort (10), qui sollicitent en rotation le support (4) à partie excentrée, sont disposés entre ce support rotatif (4) et le boîtier coulissant (7), et sont constitués par au moins un ressort de torsion.

5. Dispositif de poussoir à excentrique selon la revendication 1 ou 2, **caractérisé en ce que** les moyens à ressort (10), qui sollicitent en rotation le support (4) à partie excentrée, sont disposés entre ce support rotatif (4) et le boîtier coulissant (7), et sont constitués par au moins un ressort à lame.

6. Dispositif de poussoir à excentrique selon la revendication 1 ou 2, **caractérisé en ce que** les moyens à ressort (10), qui sollicitent en rotation le support (4) à partie excentrée, sont disposés entre ce support rotatif (4) et le boîtier coulissant (7), et sont constitués par au moins un ressort à spirale.

7. Dispositif de poussoir à excentrique selon l'une des revendications 1 à 6, **caractérisé en ce que** les moyens à ressort amortissants (11), placés entre le boîtier coulissant (7) et le carter de direction (8), sont constitués par au moins une lame ressort.

8. Dispositif de poussoir à excentrique selon l'une des revendications 1 à 6, **caractérisé en ce que** les moyens à ressort amortissants (11), placés entre le boîtier coulissant (7) et le carter de direction (8), sont constitués par au moins un bloc en élastomère.

9. Dispositif de poussoir à excentrique selon l'une des revendications 1 à 6, **caractérisé en ce que** les moyens à ressort amortissants (11), placés entre le boîtier coulissant (7) et le carter de direction (8), sont constitués par au moins un joint torique.

10. Dispositif de poussoir à excentrique selon la revendication 9, **caractérisé en ce que** les moyens à ressort amortissants (11) comprennent deux joints toriques (11 a, 11 b), respectivement placés aux deux extrémités du boîtier coulissant (7), autour de ce boîtier (7).

11. Dispositif de poussoir à excentrique selon l'une des revendications 1 à 6, **caractérisé en ce que** les moyens à ressort amortissants (11), placés entre le boîtier coulissant (7) et le carter de direction (8), sont constitués par au moins un ressort de compression.

**Claims**

1. An eccentric push member device for a rack-and-pinion steering assembly of a motor vehicle, the push member device (1) comprising a rotary mounting (4), the inner circumference (5) of which is eccentric relative to the outer circumference (6), said mounting (4) being rotationally biased in a direction by spring means (10), and being provided so as to be applied through its off-center inner circumference (5) against the back of the rack (2) so as to push the latter back towards the teeth of the steering pinion, **characterized in that** the rotary mounting (4) is rotatably mounted in a housing (7), itself being slideably mounted substantially perpendicularly to the plane (P) of the teeth (3) of the rack (2), other damping spring means (11; 11 a; 11 b) being positioned between the sliding housing (7) and a fixed member, such as the steering gearbox (8), to act on the sliding housing (7) along its sliding direction (B).

2. The eccentric push member device according to claim 2, **characterized in that** the housing (7) is slideably guided in a slide (9) made in the steering gearbox (8).

3. The eccentric push member device according to claim 1 or 2, **characterized in that** the spring members (10) which rotationally bias the mounting (4) with an off-center portion, are positioned between this rotary mounting (4) and the sliding housing (7), and are at least formed with a compression or traction spring.

4. The eccentric push member device according to claim 1 or 2, **characterized in that** the spring means (10) which rotationally bias the mounting (4) with an off-center portion, are positioned between this rotary mounting (4) and the sliding housing (7) and are formed with at least one torsion spring.

5. The eccentric push member device according to claim 1 or 2, **characterized in that** the spring means (10) which rotationally bias the mounting (4) with an off-center portion, are positioned between this rotary mounting (4) and the sliding housing (7), and are formed with at least one leaf spring.

6. The eccentric push member device according to claim 1 or 2, **characterized in that** the spring means (10) which rotationally bias the support (4) with an off-center portion, are positioned between this rotary mounting position (4) and the sliding housing (7), and are formed by at least one coil spring.

7. The eccentric push member device according to any of claims 1 to 6, **characterized in that** the damping spring means (11), placed between the sliding housing (7) and the steering gearbox (8) are formed with at least one spring leaf.

8. The eccentric push member device according to any of claims 1 to 6, **characterized in that** the damping spring means (11), placed between the sliding housing (7) and the steering gearbox (8) are formed with at least one block in elastomer.

9. The eccentric push member device according to any of claims 1 to 6, **characterized in that** the damping spring means (11) placed between the sliding housing (7) and the steering gearbox (8) are formed with at least one O-ring gasket.

10. The eccentric push member device according to claim 9, **characterized in that** the damping spring means (11) comprise two O-ring gaskets (11 a, 11 b) respectively placed at both ends of the sliding housing (7), around this housing (7).

11. The eccentric push member device according to claims 1 to 6, **characterized in that** the damping spring means (11) placed between the sliding housing (7) and the steering gearbox (8) are formed with at least one compression spring.


**Patentansprüche**

1. Exzentrisches Druckelement für eine Zahnstangenlenkung eines Kraftfahrzeugs, wobei das Druckelement (1) eine drehende Unterlage (4) umfasst, deren innerer Umfang (5) im Verhältnis zum äußeren Umfang (6) exzentrisch ist, wobei die Unterlage (4) von Federmitteln (10) in eine Richtung drehend beansprucht wird und vorgesehen ist, um mit ihrem exzentrischen inneren Umfang (5) an der Rückseite der Zahnstange (2) anzuliegen, um diese in Richtung der Zähne des Lenkungszahnrads zurückzudrücken, **dadurch gekennzeichnet, dass** die drehende Unterlage (4) drehend in einem Gehäuse (7) montiert ist, das selbst etwa senkrecht zur Ebene (P) der Zahnung (3) der Zahnstange (2) gleitend montiert ist, wobei weitere dämpfende Federmittel (11; 11a; 11 b) zwischen dem gleitenden Gehäuse (7) und einem starren Element wie dem Lenkgehäuse (8) angeordnet sind, um auf das Gehäuse (7) gemäß seiner Gleitrichtung (B) einzuwirken.

2. Exzentrisches Druckelement nach Anspruch 2, **dadurch gekennzeichnet, dass** das Gehäuse (7) gleitend in einer Gleitschiene (9) geführt wird, die im Lenkgehäuse (8) ausgebildet ist.

3. Exzentrisches Druckelement nach Anspruch 1 oder 2, **dadurch gekennzeichnet, dass** die Federmittel (10), die die Unterlage (4) mit exzentrischem Abschnitt rotierend beanspruchen, zwischen dieser drehenden Unterlage (4) und dem gleitenden Gehäuse (7) angeordnet sind und von mindestens einer Druck- oder Zugfeder gebildet werden.

4. Exzentrisches Druckelement nach Anspruch 1 oder 2, **dadurch gekennzeichnet, dass** die Federmittel (10), die die Unterlage (4) mit exzentrischem Abschnitt rotierend beanspruchen, zwischen dieser drehenden Unterlage (4) und dem gleitenden Gehäuse (7) angeordnet sind und von mindestens einer Torsionsfeder gebildet werden.

5. Exzentrisches Druckelement nach Anspruch 1 oder 2, **dadurch gekennzeichnet, dass** die Federmittel (10), die die Unterlage (4) mit exzentrischem Abschnitt rotierend beanspruchen, zwischen dieser drehenden Unterlage (4) und dem gleitenden Gehäuse (7) angeordnet sind und von mindestens einer Blattfeder gebildet werden.

6. Exzentrisches Druckelement nach Anspruch 1 oder 2, **dadurch gekennzeichnet, dass** die Federmittel (10), die die Unterlage (4) mit exzentrischem Abschnitt rotierend beanspruchen, zwischen dieser drehenden Unterlage (4) und dem gleitenden Gehäuse (7) angeordnet sind und von mindestens einer Spiralfeder gebildet werden.

7. Exzentrisches Druckelement nach einem der Ansprüche 1 bis 6, **dadurch gekennzeichnet, dass** die dämpfenden Federmittel (11), die zwischen dem gleitenden Gehäuse (7) und dem Lenkgehäuse (8) platziert sind, von mindestens einem Federblatt gebildet werden.

8. Exzentrisches Druckelement nach einem der Ansprüche 1 bis 6, **dadurch gekennzeichnet, dass** die dämpfenden Federmittel (11), die zwischen dem gleitenden Gehäuse (7) und dem Lenkgehäuse (8) platziert sind, von mindestens einem Elastomerblock gebildet werden.

9. Exzentrisches Druckelement nach einem der Ansprüche 1 bis 6, **dadurch gekennzeichnet, dass** die dämpfenden Federmittel (11), die zwischen dem gleitenden Gehäuse (7) und dem Lenkgehäuse (8) platziert sind, von mindestens einem O-Ring gebildet werden.

10. Exzentrisches Druckelement nach Anspruch 9, **dadurch gekennzeichnet, dass** die dämpfenden Federmittel (11) zwei O-Ringe (11a, 11 b) umfassen, die jeweils an den zwei Enden des gleitenden Gehäuses (7) um dieses Gehäuse (7) platziert sind.

11. Exzentrisches Druckelement nach einem der Ansprüche 1 bis 6, **dadurch gekennzeichnet, dass** die dämpfenden Federmittel (11), die zwischen dem gleitenden Gehäuse (7) und dem Lenkgehäuse (8) platziert sind, von mindestens einer Druckfeder gebildet werden.

Fig. 1

Fig. 2

Fig. 3

Fig. 4

Fig. 5

**EP 2 310 245 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6247375 B1
- FR 2219868 A
- EP 0770538 A2